# EUROPÄISCHE PATENTSCHRIFT

(11) **EP 2 844 939 B1**
(45) Veröffentlichungstag und Bekanntmachung des Hinweises auf die Patenterteilung: **30.09.2015**
(21) Anmeldenummer: 13720763.5
(22) Anmeldetag: 03.04.2013
(51) Int. Cl.: F27B 1/02, C21C 5/56, F27B 3/04, F27D 13/00

(54) **NIEDERSCHACHT-LICHTBOGENOFEN**
LOW-SHAFT ARC FURNACE
FOUR À ARC ÉLECTRIQUE À CAGE BASSE

(30) Priorität: 30.04.2012 DE 102012009217
(43) Veröffentlichungstag der Anmeldung: 11.03.2015
(73) Patentinhaber: SMS group GmbH, 40237 Düsseldorf (DE)
(72) Erfinder: SCHÜRING, Andreas, 45475 Mülheim (DE)
(74) Vertreter: Klüppel, Walter
(86) Internationale Anmeldenummer: PCT/DE2013/000192
(87) Internationale Veröffentlichungsnummer: WO 2013/163973

(56) Entgegenhaltungen:
- DE-C2- 4 236 510

## Beschreibung

Die Erfindung betrifft einen Niederschacht- Lichtbogenofen mit einem Schachtrohr, in dem mindestens eine Elektrode axial verfahrbar angeordnet ist, einer Schrottzuführung in den Zwischenraum zwischen der Ofengefäß Außenwand und dem Schachtrohr, einem sich am unteren Ende des Ofengefäßes anschließenden Herd zur Aufnahme des geschmolzenen Metalls sowie einer Abstichöffnung für die Schlacke und einer Abstichöffnung für das Metall und in den Ofenraum gerichteten Brennern, sowie ein Verfahren zum Betrieb eines derartigen Niederschacht-Lichtbogenofens.

Ein derartiger Niederschacht-Lichtbogenofen ist beispielsweise aus der DE 42 36 510 C2 oder der DE 199 15 575 B4 bekannt

Die Erfindung strebt das Ziel an, die Energiebilanz eines derartigen Systems zu verbessern.

Erreicht wird dieses Ziel mit den Merkmalen des Anspruchs 1.

Vorzugsweise Weiterbildungen ergeben sich aus den Unteransprüchen.

Erreicht wird dies durch die erfindungsgemäße Gestaltung des Niederschacht-Lichtbogenofens, der ein Einschmelzen des Chargierten Schrotts nahezu ausschließlich durch Primärenergie und die anschließende Überhitzung der Schmelze durch den Lichtbogen erlaubt. Je nach Verfügbarkeit der verschiedenen Energieformen kann auch nur ein Erwärmen des Schrottes durch die Brenner erfolgen.

Sowohl das Einschmelzen mit der Primärenergie, wie auch das Überhitzen mit dem Lichtbogen finden in demselben Gefäß nacheinander bzw. zeitgleich statt. Das metallurgische Gefäß kann sowohl komplett feststehend als auch teilweise beweglich sein. Das einzuschmelzende Metall (Schrott, DRI, HBI, Hot DRI usw.) findet auf feststehenden Bänken bzw. Fingern Halt. Hier wird er durch Primärenergie-Brenner, die sich sowohl auf der Innenschacht-Seite wie auch auf der Außenschacht-Seite befinden können eingeschmolzen. Das verflüssigte Metall tropft in den unteren Teil des metallurgischen Gefäßes, also den Herd, wo die Überhitzung mittels elektrischer Energie stattfindet. Sowohl die Prozessgase der Brenner, wie auch die Gase, die bei der Überhitzung des flüssigen Metalls entstehen, strömen durch die Schüttgutsäule und geben hierbei einen Großteil ihrer Energie an das noch nicht geschmolzene Metall ab. Der Wirkungsgrad wird hierdurch noch weiter gesteigert.

Der Einsatz von Sauerstoffbrennern in dem verkapselt ausgeführten Ofengefäß und das Schrottverteilungssystem führt zu einer Verringerung der zu reinigenden Abgase. Hierdurch wird das Gasreinigungssystem von seiner Dimensionierung kleiner und somit kostengünstiger.

Die zu installierende elektrische Leistung in dem erfindungsgemäßen Niederschacht-Lichtbogenofen ist deutlich geringer als die in einem vergleichbaren EAF gleicher Produktivität.

Beim Betrieb der elektrischen Heizung gibt es nur geringe Rückwirkungen auf das elektrische Netz, da die Heizung nur auf dem flachen Bad betrieben wird. Dies führt zur Reduzierung der Investitionskosten, da die notwendige Kompensationsanlage aufgrund des ruhigen Betriebes kleiner ausgeführt werden kann.

Erreichbar ist mit dem erfindungsgemäßen Ofen bzw. dessen Betriebsweise ein kontinuierlicher Betrieb, d. h. ein ununterbrochener Schmelz- und Überhitzungsbetrieb.

Die Erfindung soll nachfolgend mit Bezug auf die Zeichnung beschrieben werden.

Dabei zeigt:

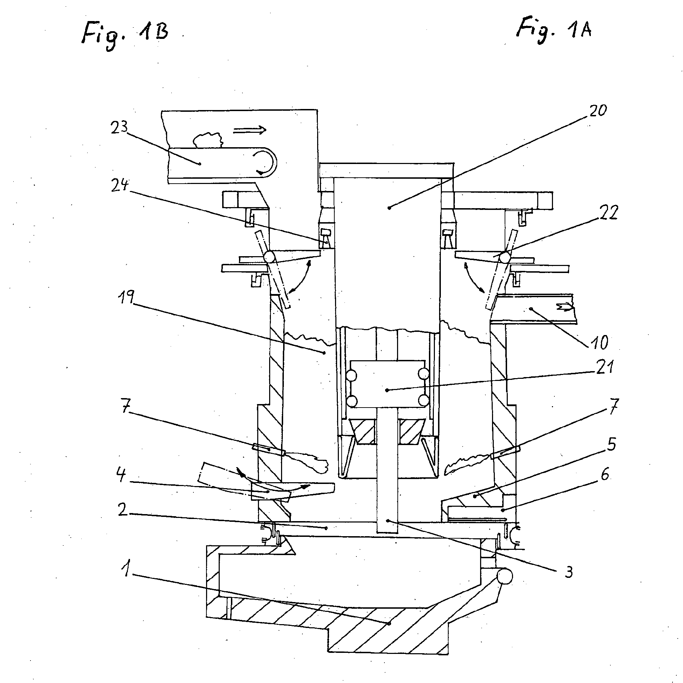

- Fig. 1A: einen schematischen Schnitt durch einen Niederschacht-Lichtbogenofen mit kontinuierlicher Schrottzufuhr mit Schrottbänken (rechte Seite der Schnittzeichnungen)
- Fig.1B: einen schematischen Schnitt durch einen Niederschacht - Lichtbogenofen mit kontinuierlicher Schrottzufuhr mit Fingern für einen Ringschachtbetrieb (linke Seite der Schnittzeichnungen)

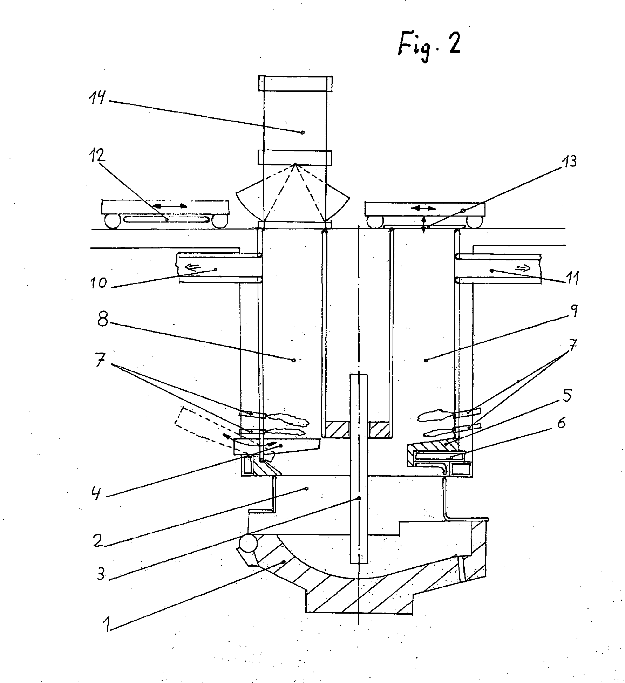

- Fig. 2: einen schematischen Schnitt durch einen Niederschacht - Lichtbogenofen mit diskontinuierlicher Schrottzufuhr (Schrottkörbe) mit Schrottbänken (rechte Seite) oder Ringschachtbetrieb mit Finger (linke Seite)

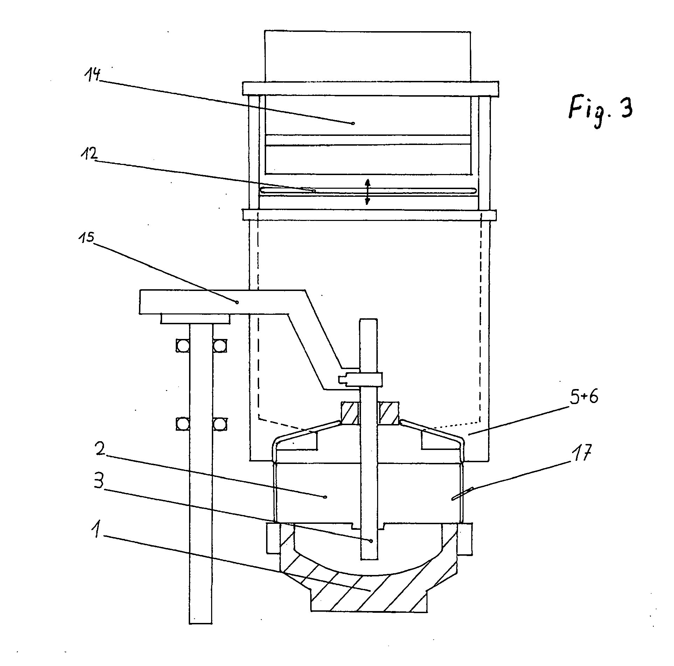

- Fig. 3: einen Niederschacht- Lichtbogenofen mit kontinuierlicher Schrott Zufuhr

Im Einzelnen sieht hierzu die Erfindung einen Niederschacht- Lichtbogenofen mit koaxial zum Ofengefäß angeordnetem Schachtrohr 20 vor, in dem mindestens eine Elektrode 3 axial verfahr bar angeordnet ist, einer Schrottzuführung 23 + 22 in den Zwischenraum zwischen der Ofengefäß Außenwand und dem Schachtrohr 20, einem sich am unteren Ende des Ofengefäßes anschließenden Herd 1 zur Aufnahme des geschmolzenen Metalls sowie einer Abstichöffnung für die Schlacke und einer Abstichöffnung für das Metall und in den Ofenraum gerichteten Primärenergiebrennern 7, der dadurch gekennzeichnet ist,
- dass im Bereich des unteren Endes des Schachtrohres von der Außenwand des Ofengefäßes in Richtung Schachtrohr weisende Schrottbänke 5 + 6 vorgesehen sind, die das Schachtrohr mit Abstand koaxial umgeben,
- dass die Primärenergiebrenner 7 oberhalb der Schrottbänke zum Einschmelzen bzw. Erhitzen des sich auf den Schrottbänken ansammelnden Schrotts angeordnet sind,
- und dass der Ringraum 19 zwischen den Schrottbänken und dem Schachtrohr 20 derart bemessen ist, dass das flüssige Metall durch den Ringraum in den Herd 1 fließen kann, wobei
- die Geometrie der Schrottbänke so ausgeführt ist, dass das erschmolzene Metall auch bei gekippten Gefäß in den Herd gelangt. Hierdurch ist ein kontinuierlicher Einschrnelzbetrieb möglich.

Dabei können ggf. noch notwendige metallurgische Arbeiten ebenfalls im Herd ausgeführt werden.

Entscheidend ist, dass der größere Teil des Schmelzprozesses mit Primärenergie durchgeführt wird.

Der Einsatz der mit Transformation und Transport -Verlusten produzierten elektrischen Energie wird minimiert und nur noch für den Prozess des Überhitzens des Metalls eingesetzt. Durch diese Kombination dieser beiden Technologien gelingt es, energiesparend und umweltschonend flüssiges Metall zu erzeugen.

### Ringschachtbetrieb

Durch den Einbau von Fingern 4 anstelle der der Schrottbänke 5 ist ein Ringschacht - Ofenbetrieb möglich; somit ist auch ein konventioneller Ofenbetrieb mit diesem Ofenkonzept möglich. Hierbei können die Brenner 7 sowohl oberhalb wie auch unterhalb der Finger angeordnet werden. Das erschmolzene Metall tropft direkt aus dem Schacht in den Herd 1.

Alternativ ist auch ein Aufbau mit zwei parallelen Kammern für den Schrott möglich, hierdurch kann diskontinuierlich Schrott mit Hilfe von Körben chargiert werden (Fig. IIIA)

Im Einzelnen sieht die Erfindung zwei im Ofengefäß 1+2 angeordnete Schächte 8+9 vor. Auch hier sind wieder die beiden Ausführungen:
- Schrottbänke 5+6, mit oberhalb angeordneten Brennern 7 oder
- Fingerbetrieb, mit oberhalb der Finger 4 angeordneten Brennern 7
möglich.

Alternativ ist für alle Ausführungsformen denkbar, dass der untere Gefäßteil, also der Herd für die Überhitzung oval ausgeführt ist, die elektrische Energie in einem Erker seitlich zugeführt und eine Strömung im Bad mittels eines Brenners / einer Lanze erzeugt wird.

Da der Ofen kontinuierlich betrieben wird, wird die Schrottsäule konstant gehalten, so dass sich gleichmäßige Betriebsbedingungen für die Brenner sowie die Erwärmung und das Aufschmelzen der Schrottsäule ergeben.

Aus dem unteren Überhitzungsgefäß wird der geschmolzene Schrott regelmäßig in Pfannen abgestochen.

Weitere Möglichkeiten und Vorteile sind:
- Die Überhitzungseinrichtung kann mit Gleichstrom (eine Elektrode) aber auch mit Wechselstrom (drei Elektroden) betrieben werden.
- Der Ofen wird mit einem Restsumpf betrieben, so dass permanent elektrische Energie zugeführt werden kann.
- Innerhalb des Herdes oder Untergefäßes kann permanent für eine Desoxydation gesorgt werden.
- Durch Einbringen von Kohlenstoffträgern im Untergefäß, d. h, chemische Elemente oder Verbindungen die Kohlenstoff enthalten, kann ein Teil des verschlackten Eisen zurück reduziert werden in flüssiges Eisen.
- Das durch die ruhige elektrische Fahrweise dieses Niederschachtofens und die möglichst Luftdichten Bauweise sind die notwendigen Investitionskosten für die Gasreinigungsanlage und die elektrische Kompensationsanlage geringer sind als die eines vergleichbaren Lichtbogenofens konventioneller Bauart.
- Durch die Geometrie des Ringraums bzw. der zwei Schächte als Wirkraum der Brenner, können die eingesetzten Brenner den Querschnitt komplett durchheizen. Dennoch ist der darunter angeordnete Herd, der Gestalt, das aufgrund der geringeren elektrischen Leistung des Lichtbogens und des großen Abstandes des Lichtbogens zu den Wänden des Gefäße ein geringerer Verschleiß an Feuerfestmaterial zu erwarten ist.

Die in den Zeichnungen verwendeten weiteren Bezugszeichen sind:
Abgaskanäle 10 und 11, die Darstellung des offenen 12 und verschlossenen 13 Schachtverschlusses, Schrottkorb 14, sowie ein Tragarm 15 für die Elektrode 3.

Mit 17 ist ein Sauerstoffinjektor und mit 21 ein Regulierschlitten bezeichnet.

Schließlich ist mit 24 noch ein Füllstandsmesser angedeutet.

## Patentansprüche

1. Niederschacht- Lichtbogenofen mit einem Schachtrohr (20), in dem mindestens eine Elektrode (3) axial verfahrbar angeordnet ist, einer Schrottzuführung (22, 23) in den Zwischenraum zwischen der Ofengefäß Außenwand und dem Schachtrohr, einem sich am unteren Ende des Ofengefäßes anschließenden Herd (1) zur Aufnahme des geschmolzenen Metalls sowie einer Abstichöffnung für die Schlacke und einer Abstichöffnung für das Metall und in den Ofenraum gerichteten Brennern,
**dadurch gekennzeichnet,**
- **dass** im Bereich des unteren Endes des Schachtrohres (20) von der Außenwand des Ofengefäßes in Richtung Schachtrohr weisende Schrottbänke oder Finger vorgesehen sind, die das Schachtrohr mit Abstand umgeben,
- **dass** die Primärgasbrenner (7) oberhalb der Schrottbänke oder Finger zum Einschmelzen des sich auf den Schrottbänken ansammelnden Schrotts angeordnet sind,
- und **dass** der Ringraum (19) zwischen den Schrottbänken und dem Schachtrohr derart bemessen ist, dass das flüssige Metall durch den Ringraum (19) in den Herd fließen kann, wobei.
- die Geometrie der Schrottbänke so ausgeführt ist, dass das erschmolzene Metall auch bei gekippten Gefäß in den Herd (1) gelangt.

2. Niederschacht-Lichtbogenofen nach Anspruch 1,
**dadurch gekennzeichnet,**
**dass** die Primärenergie Brenner sowohl auf der Innenschacht Seite wie auch Außenschacht Seite angeordnet sind.

3. Verfahren zum Betrieb eines Niederschacht-Lichtbogenofens nach Anspruch 1 und 2,
**dadurch gekennzeichnet,**
**dass** das Einschmelzen des Schrotts nahezu vollständig mittels zugeführter Primärenergie erfolgt und lediglich das Überhitzen des geschmolzenen Metalls durch den Lichtbogen erfolgt.

4. Verfahren nach Anspruch 3,
**dadurch gekennzeichnet,**
**dass** die beiden Prozessschritte des Erschmelzens des Metalls mittels Primärenergie und des Überhitzen des erschmolzenen Metalls mittels elektrischer Energie gleichzeitig in einem Gefäßsystem erfolgen.

5. Verfahren nach einem der vorstehenden Ansprüche,
**dadurch gekennzeichnet,**
**dass** sowohl die Prozessgase der Primärenergie Brenner wie auch die Gase des Lichtbogenbetriebes durch die Schüttung geleitet werden und hierbei einen Großteil Ihres Energiegehaltes an das Schüttgut abgeben.

6. Verfahren nach einem der vorstehenden Ansprüche,
**dadurch gekennzeichnet,**
**dass** sowohl die Einschmelzphase wie auch der Überhitzungsbetrieb mit Hilfe des Lichtbogens kontinuierlich betrieben werden.

7. Verfahren nach einem der vorstehenden Ansprüche,
**dadurch gekennzeichnet,**
**dass** die Verteilung der Primer- und elektrischen Energie für das Schmelzen und Überhitzen variabel aufgeteilt werden, je nach jeweiliger Verfügbarkeit und Beschaffungskosten.

## Claims

1. Low-shaft arc furnace with a shaft cylinder (20), in which at least one electrode (3) is arranged to be axially movable, a scrap feed (22, 23) into the intermediate space between the furnace shell outer wall and the shaft cylinder, a hearth (1), which is connected with the lower end of the furnace shell, for receiving molten metal, a tap opening for the slag, a tap opening for the metal and burners directed into the furnace interior, **characterised in that**
- scrap ledges or fingers, which are directed from the outer wall of the furnace shell towards the shaft cylinder and which surround the shaft cylinder at a spacing, are provided in the region of the lower end of the shaft cylinder (20),
- the primary gas burners (7) are arranged above the scrap ledges or fingers for melting the scrap collecting on the scrap ledges, and
- the annular space (19) between the scrap ledges and the shaft cylinder is so dimensioned that the liquid metal can flow through the annular space (19) into the hearth, wherein the geometry of the scrap ledges is such that the molten metal can pass into the hearth (1) even when the shell is tilted.

2. Low-shaft arc furnace according to claim 1, **characterised in that** the primary energy burners are arranged not only on the internal shaft side, but also on the external shaft side.

3. Method of operating a low-shaft arc furnace according to claim 1 and 2, **characterised in that** the melting of the scrap is carried out almost entirely by means of supplied primary energy and merely superheating of the molten metal is carried out by the arc.

4. Method according to claim 3, **characterised in that** the two process steps of melting the metal by means of primary energy and superheating the molten metal by means of electric energy are carried out in a shell system at the same time.

5. Method according to any one of the preceding claims, **characterised in that** both the process gases of the primary energy burners and the gases of the arc operation are conducted through the bulk-material accumulation and **in that** case deliver a major part of their energy content to the bulk material.

6. Method according to any one of the preceding claims, **characterised in that** both the melting phase and the superheating operation are operated continuously with the help of the arc.

7. Method according to any one of the preceding claims, **characterised in that** the distribution of the primary and electrical energy for the melting and superheating is apportioned variably depending on the respective availability and procurement costs.

## Revendications

1. Four à arc électrique du type à basse cuve, comprenant un tube de cuve (20) dans lequel est disposée au moins une électrode (3) apte à se déplacer en direction axiale, une introduction de riblons (22, 23) dans l'espace libre ménagé entre la paroi externe de la cuve du four et le tube de cuve, un foyer (1) qui se raccorde à l'extrémité inférieure de la cuve du four pour la réception du métal en fusion, ainsi qu'un trou de coulée pour le laitier et un trou de coulée pour le métal et des brûleurs orientés vers l'espace interne du four, **caractérisé**
- **en ce que**, dans la zone de l'extrémité inférieure du tube de cuve (20) on prévoit des doigts ou des bancs à riblons orientés depuis la paroi externe de la cuve du four en direction du tube de cuve, qui entourent à distance le tube de cuve ;
- **en ce que** les brûleurs à gaz primaire (7) sont disposés au-dessus des doigts ou des bancs à riblons pour la mise en fusion des riblons qui se rassemblent sur les bancs à riblons ;
- et **en ce que** l'espace annulaire (19) entre les bancs à riblons et le tube de cuve est dimensionné de manière telle que le métal en fusion peut s'écouler à travers l'espace annulaire (19) jusque dans le foyer ;
- la géométrie des bancs à riblons étant conçue de telle sorte que le métal en fusion aboutit dans le foyer (1) même lorsque la cuve a basculé.

2. Four à arc électrique du type à basse cuve selon la revendication 1, **caractérisé en ce que** les brûleurs à énergie primaire sont disposés aussi bien sur le côté interne de la cuve que sur le côté externe de la cuve.

3. Procédé pour la mise en service d'un four à arc électrique du type à basse cuve selon les revendications 1 et 2, **caractérisé en ce que** la mise en fusion de riblons a lieu de manière pratiquement complète au moyen de l'énergie primaire acheminée, seule la surchauffe du métal en fusion étant réalisée au moyen de l'arc électrique.

4. Procédé selon la revendication 3, **caractérisé en ce que** les deux étapes opératoires, c'est-à-dire la mise en fusion du métal au moyen d'énergie primaire et la surchauffe du métal en fusion au moyen d'énergie électrique se déroulent de manière simultanée dans un système de cuve.

5. Procédé selon l'une quelconque des revendications précédentes, **caractérisé en ce que**, aussi bien les gaz de traitement des brûleurs à énergie primaire que les gaz émanant de la mise en service de l'arc électrique sont guidés à travers la couche de matière en vrac et ainsi cèdent une grande partie de leur teneur en énergie au produit en vrac.

6. Procédé selon l'une quelconque des revendications précédentes, **caractérisé en ce que**, aussi bien la phase de mise en fusion que l'opération de surchauffe sont mises en service en continu à l'aide de l'arc électrique.

7. Procédé selon l'une quelconque des revendications précédentes, **caractérisé en ce que** la répartition de l'énergie primaire et de l'énergie électrique pour la mise en fusion et pour la surchauffe se fait de manière variable, en fonction de la disponibilité respective et des coûts d'approvisionnement.
